# EUROPEAN PATENT SPECIFICATION

(11) **EP 0 435 224 B1**
(45) Date of publication and mention of the grant of the patent: **05.07.1995**
(21) Application number: 90125279.1
(22) Date of filing: 21.12.1990
(51) Int. Cl.: H04Q 9/14

(54) **Remote supervisory and controlling system performing dimming control of light loads**
Fernüberwachungs- und Steuerungssystem das eine Beleuchtungsregelung der Lampenlasten durchführt
Système de surveillance et de commande à distance effectuant une commande de réduction de charges de lampes

(30) Priority: 25.12.1989 JP 335402/89; 26.06.1990 JP 167834/90; 26.06.1990 JP 167874/90; 14.09.1990 JP 245343/90
(43) Date of publication of application: 03.07.1991
(73) Proprietor: MATSUSHITA ELECTRIC WORKS, LTD., Kadoma-shi Osaka 571 (JP)
(72) Inventor: Ito, Yoshiharu, No. 1048, Oaza Kadoma, Kadoma-shi, Osaka (JP); Nakano, Susumu, No. 1048, Oaza Kadoma, Kadoma-shi, Osaka (JP); Masuda, Toshiyuki, No. 1048, Oaza Kadoma, Kadoma-shi, Osaka (JP); Yamamoto, Masatoshi, Tsu-shi Mie (JP)
(74) Representative: Grünecker, Kinkeldey, Stockmair & Schwanhäusser Anwaltssozietät

(56) References cited:
- US-A- 4 780 872
- PATENT ABSTRACTS OF JAPAN vol. 8, no. 190 (E-263)(1627)31 August 1984 & JP-A-59 080 095 ( MATSUSHITA DENKO K.K. )

## Description

The present invention relates to a remote supervisory and controlling system according to the preamble part of claim 1 in which a central control unit accesses terminal units for time-divisional multiplex transmission of data to control loads, in particular to perform dimming control of light loads, connected to the terminal units.

Such a system is basically described, except for the variable dimming control, in U.S. Patent No. 4,780,872 and Japanese Patent Application Unexamined Publication Nos. Hei. 1-114194 and Hei. 1-140894.

Japanese Patent Application Unexamined Publication No. Sho. 64-86480 discloses a remote supervisory and controlling system in which a central control unit accesses terminal units to perform time-divisional multiplex data transmission therebetween and which performs dimming control of light loads. In this system, the central control unit (main operation panel) accesses a dimming control terminal unit to send dimming control data, and the dimming control terminal unit control, based on the received dimming control data, its high frequency output to dim an associated light load. However, this system has a disadvantage that the dimming control of the light load can only be conducted by the central control unit, and therefore cannot provide sufficient operational easiness of the system.

Another system may be conceivable in which a central control system manages the dimming control level for each dimming control terminal unit. That is, when manipulation of a dimming-up switch or dimming-down switch is detected, the dimming control level stored in a RAM is increased or decreased one level by one level, and the altered level is each time transmitted to the dimming control terminal unit. However, such a system has a problem of low transmission efficiency of a transmission signal, because it is required to continue to send the dimming level while the dimming-up switch or dimming-down switch is depressed.

Further, there is known a dimming control system employing time-divisional multiplex data transmission in which a central control unit (operation panel) located at a center facility controls a plurality of dimming control terminal units at once. However, such a system cannot simultaneously control the dimming control terminal units distant from the central control unit. Further, it is difficult in such a system to alter the group setting of the dimming control terminal units, i.e., light loads.

The present invention has been made in consideration of the above problem of the prior art and, therefore, an object of the invention is to provide a remote supervisory and controlling system which can perform dimming control of light loads from an arbitrary place.

Another object of the invention is to provide a remote supervisory and controlling system which can perform dimming control of light loads with high transmission efficiency of a transmission signal sent from a central control unit to a dimming control terminal unit.

A further object of the invention is to provide a remote supervisory and controlling system employing time-divisional multiplex data transmission which can simultaneously control grouped dimming control terminal units, i.e., light loads, distant from a central control unit, and also can alter the group setting of the dimming control terminal units.

According to the present invention, a remote supervisory and controlling system, according to the preamble part of claim 1, comprises further :
a dimming switch terminal unit, connected to the signal line, for monitoring at least a dimming-up switch and a dimming-down switch;
a dimming control terminal unit, connected to the signal line, for performing dimming-up and dimming-down control of an associated light load; and
the central control unit, for, upon depression of the dimming-up switch or dimming-down switch, detecting dimming monitor data sent from the dimming switch terminal unit which indicates depression of the dimming-up switch or dimming down switch and sending to the dimming control terminal unit first control data which instructs it to start the dimming-up or dimming down control, and for, upon release of the dimming-up switch or dimming-down switch, sending to the dimming control terminal unit second control data which instructs it to stop the dimming-up or dimming-down control;
wherein the dimming control terminal unit continues by itself the dimming-up or dimming-down control during a period from reception of the first control data to reception of the second control data.

The system may be constructed such that each time a predetermined variation has occurred in a dimming level of the light load, the dimming control terminal unit sends to the central control unit level monitor data indicating the dimming level of the associated light load, the central control unit sends third control data indicating the dimming level to the dimming switch terminal unit, and the dimming switch terminal unit indicates the dimming level on the basis of the third control data.

The system may, according to a preferred embodiment further comprise :
a group dimming terminal unit, connected to the signal line, for monitoring at least a group dimming-up switch and a group dimming-down switch; and
memory means, provided in the central control unit, for storing addresses of selected ones of the dimming control terminal units;
wherein when the group dimming-up switch or group dimming-down switch of the group dimming terminal unit is manipulated, the central control unit controls the selected ones of the dimming control terminal units on the basis of the addresses stored in the memory means and group monitor data sent from the group dimming terminal unit which indicates manipulation of the group dimming-up switch or group dimming-down switch so that a plurality of the light loads connected to the respective selected ones of the dimming control terminal units are subjected to dimming control at once.
Fig. 1 is a block diagram showing a remote supervisory and controlling system according to an embodiment of the present invention;
Fig. 1A is a block diagram showing a central control unit used in the system of Fig. 1;
Fig. 2 includes waveform diagrams showing a transmission signal and an interruption request signal;
Fig. 3 is a block diagram showing a dimming control terminal unit used in the system of Fig. 1;
Fig. 4(a) is a block diagram showing a dimming switch terminal unit used in the system of Fig. 1;
Fig. 4(b) is a chart showing an example of setting of terminal unit functions;
Fig. 5 includes diagrams showing a monitor data signal;
Fig. 6 ia a block diagram showing another example of a dimming switch terminal unit used in the system of Fig. 1;
Fig. 7 is a flow chart showing the operation of the system of Fig. 1;
Fig. 8 is a partial diagram showing a remote supervisory and controlling system according to a second embodiment of the invention which includes a group dimming terminal unit;
Fig. 9 is a chart showing an example of group setting of dimming switch terminal units;
Fig. 10 is a flow chart showing the group dimming control operation performed by the system of Fig. 8;
Fig. 11 is a circuit diagram showing an embodiment of a dimming switch terminal unit;
Fig. 12 is a chart showing a format of data to be written into an EEPROM in the circuit of Fig. 11;
Fig. 13 is a perspective view showing a disassembled state of the dimming switch terminal unit of Fig. 11;
Fig. 14 is a perspective rear view showing a manipulation block;
Figs. 15 and 16 are sectional views showing an assembly of parts of the dimming switch terminal unit of Fig. 13;
Fig. 17 is a plan view of a cover used in the dimming switch terminal unit of Fig. 13;
Fig. 18 is a front view showing the dimming switch terminal unit of Fig. 13 installed on a cosmetic plate;
Fig. 19 is a circuit diagram showing an example of a dimming control terminal unit;
Fig. 20 is a perspective view showing a disassembled state of the dimming control terminal unit of Fig. 19;
Fig. 21 is a perspective view showing an appearance of the dimming control terminal unit of Fig. 20; and
Fig. 22 is a sectional view showing the dimming control terminal unit of Fig. 20.

### DETAILED DESCRIPTION OF THE PREFERRED EMBODIMENTS

Preferred embodiments of the present invention will be described with reference to the accompanying drawings. In the drawings, the same reference numerals represent the parts having the same functions, and therefore redundant descriptions for those may be omitted.

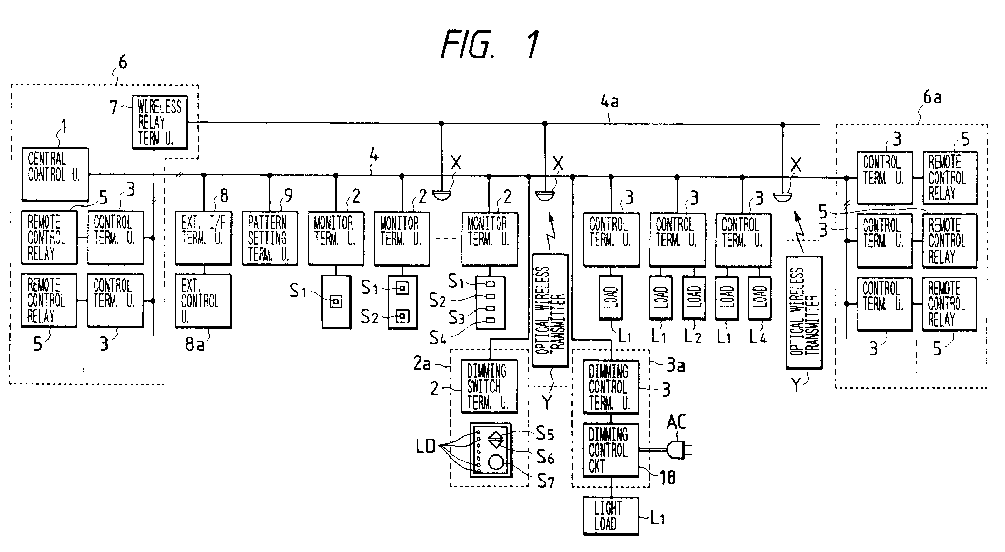

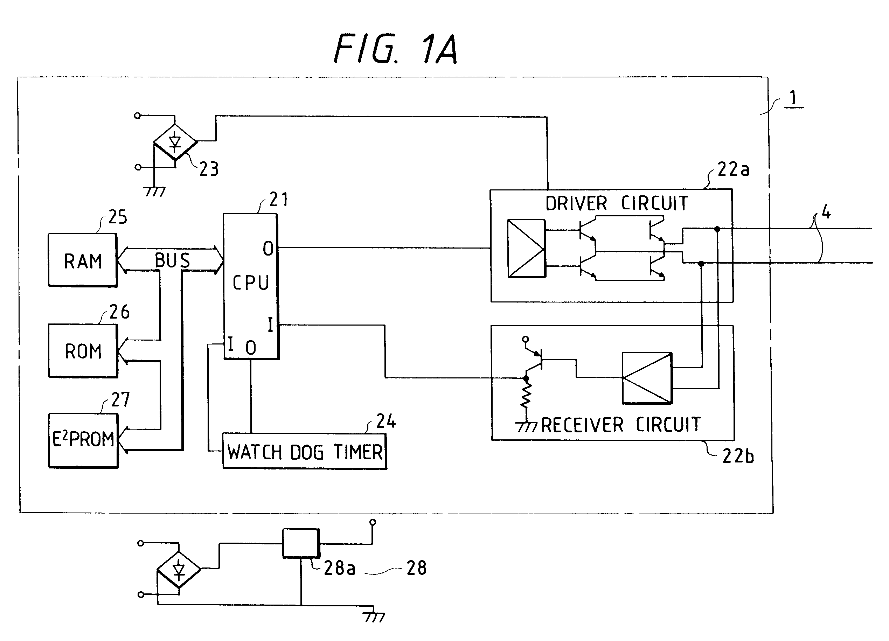

Fig. 1 shows the general construction of a remote supervisory and controlling system according to an embodiment of the present invention. In the drawing, connected to each other by a two-wire signal line 4 are a central control unit 1, a plurality of monitor terminal units 2 having respective addresses for monitoring switches S₁-S₄, a plurality of control terminal units 3 for controlling loads L₁-L₄, an optical wireless relay terminal unit 7, an external interface terminal unit 8 and a pattern setting terminal unit 9. An external control unit 8a such as a host computer is connected to the external interface terminal unit 8.

A schematic block diagram of the central control unit 1, which serves as a transmission unit for the remote supervisory and controlling system, is shown in Fig. 1A. The central control unit 1 includes a driver circuit 22a and a receiver circuit 22b directly coupled to the multiplex transmission signal line 4. A power source 23 for the driver circuit 22a provides the necessary energization for the driver circuit 22a. The driver circuit 22a and receiver circuit 22b are connected to terminals of a central processing unit (CPU) 21. A random access memory (RAM) 25, a read-only memory (ROM) 26, and an electrically erasable programmable ROM (EEPROM) 27 are connected to the CPU 21 through a bus line. The RAM 25 temporarily stores data at the time of data transmission between the CPU 21 and ROM 26. The ROM 26 stores a program for converting an output signal of the CPU to a multiplex transmission signal, and also stores addresses. The EEPROM 27 stores on/off states of the terminal units, and also stores group patterns of the control terminal units. The CPU 21 is driven by a power source 28 which provides the necessary energization for the CPU 21. Reference numeral 28a denotes a voltage-regulating circuit. The central control unit 1 manages all of the addresses, patterns, etc., for the load control operations.

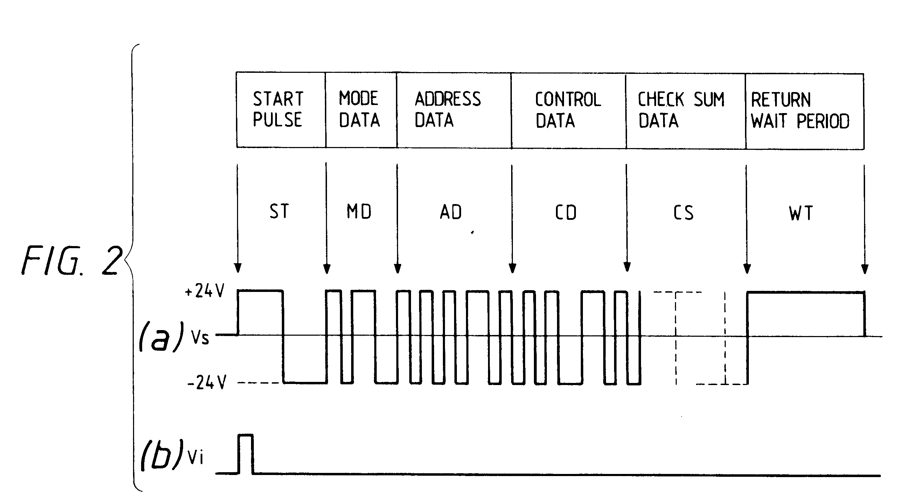

A transmission signal V_{S} transmitted from the central control unit 1 is a bipolar (±24 V), time-divisional multiplex signal, and consists of, as shown in Fig. 2(a), a start pulse signal ST indicative of the start of the signal transmission, a mode data signal MD indicative of a signal mode, an address data signal AD representing 8-bit address data for accessing one of the terminal units 2 and 3, a control data signal CD representing control data for controlling the loads L₁-L₄, a check sum data signal CS, and a return wait period signal WT for setting a signal return period. The data transmission is performed using a pulse-width modulation technique.

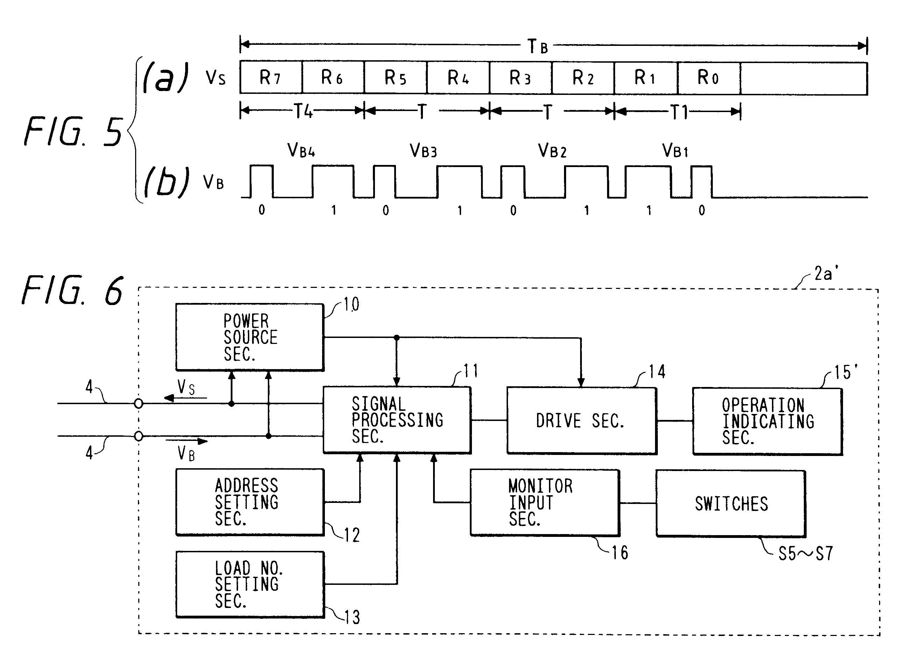

Each of the terminal units 2, 3, 7, 8 and 9 is equipped with a terminal power circuit for rectifying and smoothing the transmission signal V_{S} sent through the signal line 4. That is, these terminal units are supplied with electric power by the central terminal unit 1 through the signal line 4. Each of the terminal units 2, 3, 7, 8 and 9 takes in the control data included in the received transmission signal V_{S} when the address data included in the transmission signal V_{S} coincides with its own address data. Further, each of those terminal units returns, in synchronism with the return wait period signal WT, a monitor data signal (status monitor information of a switch, operation status information of a load, etc.) as a current mode signal which is sent by connecting the two wires of the signal line 4 by a resistor of appropriate low impedance. In order to easily check the signal content at the time of the group access (simultaneous access of a plurality of terminal units), such a return signal V_{B} is designed to be a signal of 4 bits V_{B1}-V_{B4} each consisting of, as shown in Fig. 5, a pair of wide and narrow pulses respectively indicating "1" and "0". The return signal V_{B} is returned in synchronism with prescribed periods T₁-T₄ (R₀-R₇) in a return period T_{B}.

The data transmission from the monitor terminal unit 2 and optical wireless relay terminal unit 7 to the central control unit 1 is performed by using an interruption technique. In the interruption process, a dummy transmission signal V_{S}, in which the mode data signal MD is set to a dummy mode, is always transmitted from the central control unit 1. When an interruption request signal Vᵢ as shown in Fig. 2(b), which is returned from one of the terminal units 2 and 7, is received in synchronism with the start pulse signal ST, the central control unit 1 detects a terminal 2 or 7 requesting an interruption by sending a transmission signal V_{S} of an interruption polling mode, and accesses the detected interruption-requesting terminal 2 or 7 to make it return data. (The detailed operation will be described later.)

Based on the monitor data (e.g., status information of switches S₁-S₄) thus returned from one of the terminal units 2, 7, ...., the central control unit 1 generates the control data to be transmitted to the corresponding control terminal unit 3 for controlling the associated load L₁-L₄, and accesses the control terminal 3 and sends, by time-divisional multiplex transmission, the generated control data to the terminal unit 3 to control the load L₁-L₄. Further, based on the monitor data (e.g., operation status information of the loads L₁-L₄) returned during the return period, the central control unit 1 sends, by time-divisional multiplex transmission, the control data to cause operation indicators (lamps) of the terminal unit 2, 7, .... to flash.

In Fig. 1, dimensions of the terminal units 2, 3, .... installed in a distribution switch board 6 or a relay control board 6a are normalized according to Japanese Industrial Standard (C-8370, Supplement 5). Remote control relays 5 for load control, i.e., latching relays which can also be turned on or off by at-hand switches, are controlled by respective outputs of the control terminal units 3.

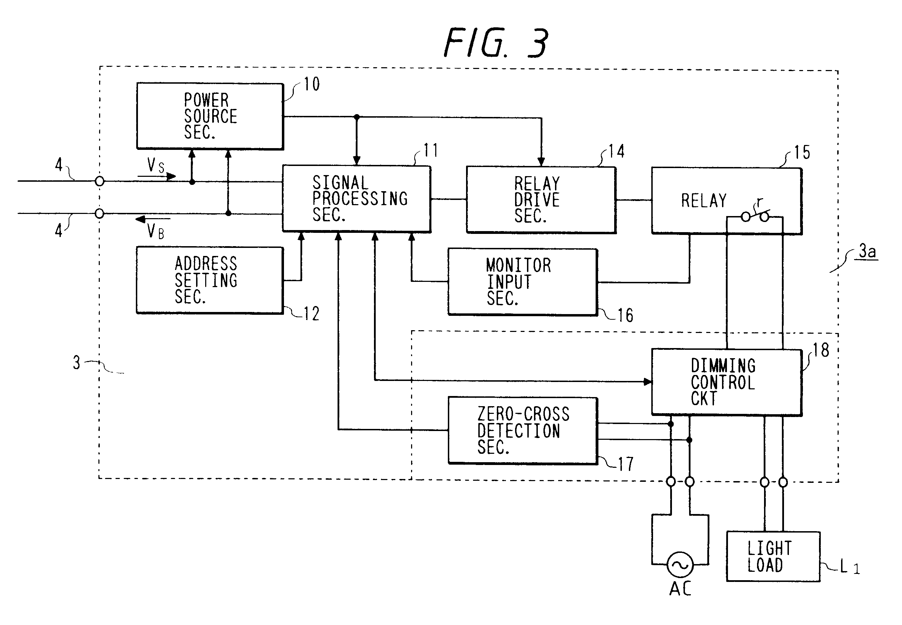

As shown in Fig. 3, a dimming control terminal unit 3a consists of a power source section 10 for producing a power for the terminal unit 3a by rectifying and smoothing the transmission signal V_{S} sent through the signal line 4; a signal processing section 11 for performing signal processing on the transmission signal V_{S} and the return signal V_{B}, etc.; an address setting section 12 for setting an own address; a relay drive section 14 for driving a relay 15 based on the control data; a monitor input section 16 for monitoring the operation status of the relay 15; a zero-cross detection section 17 for outputting a zero-cross signal in synchronism with zero-cross points of a commercial power line AC; and a dimming control circuit 18 for dimming a light load L₁ by phase control based on dimming control data and the zero-cross signal, and for on/off-controlling the light load L₁ based on the status of a contact r.

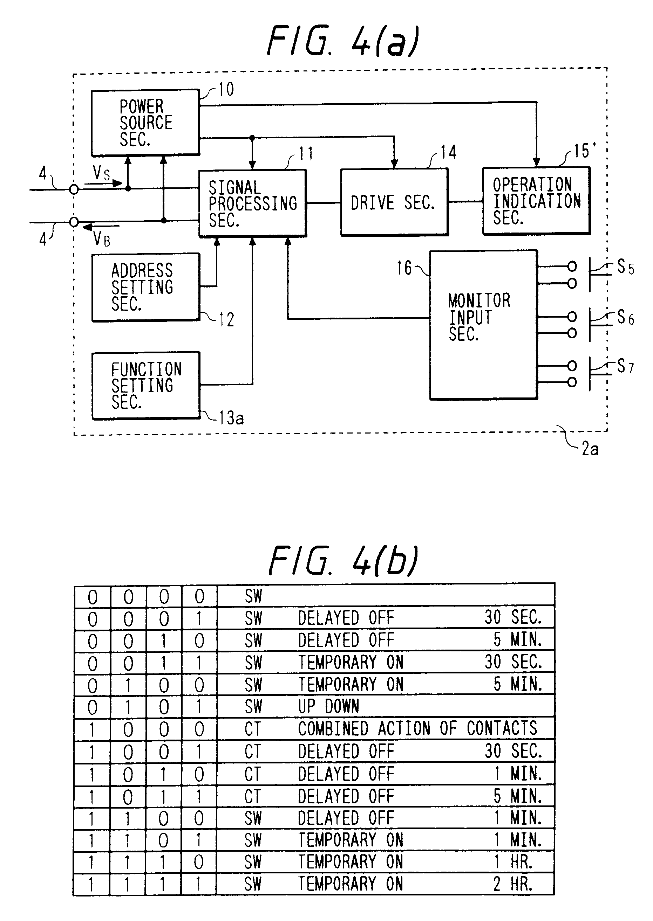

As shown in Fig. 4(a), a dimming switch terminal unit 2a consists of a power source section 10; a signal processing section 11; an address setting section 12; a function setting section 13a for setting terminal unit functions (described later); a drive section 14; an operation indication section 15' for indicating the dimming level and on/off status of the corresponding light load L, by an array of light-emitting diodes LD; and a monitor input section 16 for monitoring the status of a dimming-up switch S₅, and a dimming-down switch S₆. Fig. 4(b) shows an example of setting of the terminal unit functions. In this example, using 4-bit data, functions can be set such as an input method, i.e., a selection between a switch input terminal unit (SW) and a contact input terminal unit (CT), delayed turning off, temporary turning off, combined action of contacts, and an operation time.

As described above, in the embodiment of the remote supervisory and controlling system, the control data and monitor data are transmitted through the two-wire signal line 4 by time-divisional multiplex transmission. Connected to the signal line 4 are the dimming switch terminal unit 2a for monitoring the dimming-up switch S₅ and dimming-down switch S₆, and the dimming control terminal unit 3a which is equipped with the dimming control circuit 18 for dimming the light load L₁. The central control unit 1 includes a signal processing means for monitoring, by an interruption process, the manipulation status of the switches S₅ and S₆ in the dimming switch terminal unit 2a, and for generating the dimming control data. The central control unit 1 accesses the corresponding dimming control terminal unit 3a and transmits the dimming control data, to perform the dimming control of the associated light load L₁. Therefore, the dimming control of the light load L₁ can be conducted from an arbitrary place by connecting the dimming switch terminal unit 2a to the signal line 4.

Using an optical wireless transmitter Y and receiver X, data of switch manipulation corresponding to the manipulation of the dimming-up switch S₅ and dimming-down switch S₆ may be returned to the central control unit 1 through the optical wireless relay terminal unit 7 and the signal line 4. In this case, the dimming control of the light load L₁ can be performed easily from an arbitrary place, improving operational easiness of the system.

Fig. 6 shows a dimming switch terminal unit 2a′ in which a load number setting section 13 is employed, instead of the function setting section 13a, which sets numbers of loads selected from the loads L₁-L₄ connected to respective load control circuits (4 circuits in the embodiment) in the corresponding control terminal unit 3a. The other construction and operation of the terminal unit 2a′ are the same as those of the dimming switch terminal unit 2a.

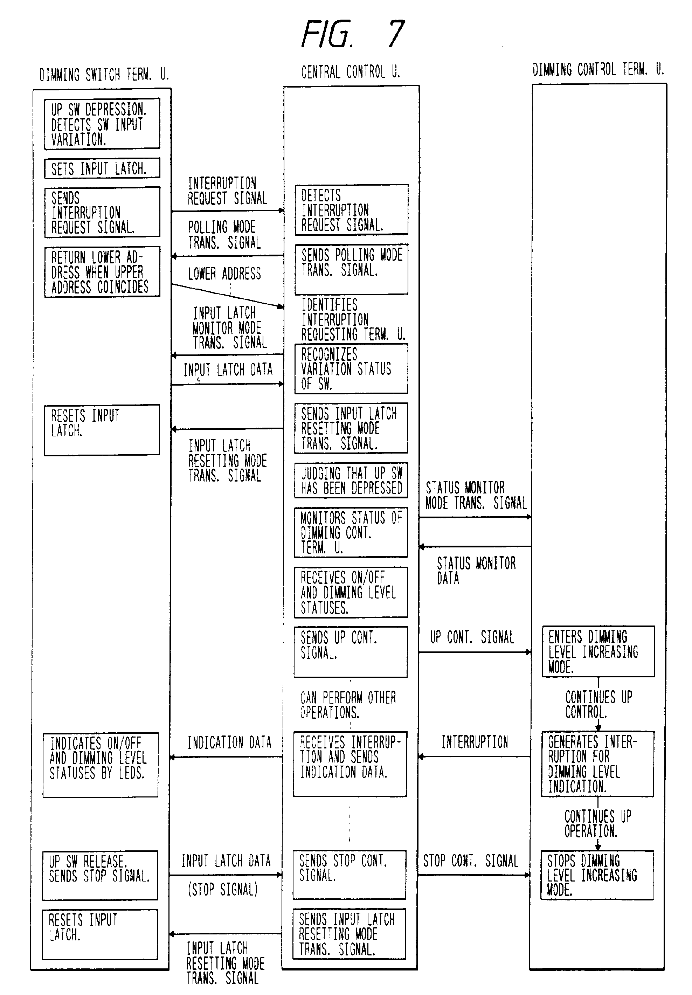

The operation of the system of Fig. 1 will be described below. Fig. 7 shows an example of a data transmission method which transmits switch monitor information to the central control unit 1 by an interruption process, when a variation in a switch input is detected in the dimming switch terminal unit 2a due to the manipulation of the switch S₅ or S₆. When the dimming-up switch S₅ in the dimming switch terminal unit 2a is manipulated (depressed) and a switch input variation is detected, the input variation is set in an input latch and an interruption request pulse Vᵢ is immediately sent out in synchronism with the start pulse signal ST of the dummy mode transmission signal V_{S} which is always transmitted. Upon reception of the interruption request signal Vᵢ, the central control unit 1 sends the polling mode transmission signal V_{S} to search the interruption-requesting terminal unit 2a and makes it return its own address. In the embodiment, the upper 4 bits of the 8-bit address data are sent by the transmission signal V_{S} of the interruption polling mode to perform group-access to all the terminal units on a 16 units basis. If the interruption-requesting terminal unit 2a is found in the group-accessed 16 terminal units 2a, ...., the central control unit 1 makes the detected interruption-requesting terminal unit 2a return the lower 4 bits of its own 8-bit address data, and combines the upper 4 bits which the central control unit 1 has sent and the returned lower 4 bits to complete the address of the interruption-requesting terminal unit 2a, i.e., to determine the interruption-requesting terminal unit 2a.

Next, based on the address thus identified the central control unit 1 accesses the interruption-requesting terminal unit 2a, sends the transmission signal V_{S} of an input latch monitor mode to make it return the input latch data as monitor data during the prescribed return period, and thereby recognizes the variation status of the dimming-up switch S₅. Then, the central control unit 1 sends the transmission signal V_{S} of an input latch resetting mode to reset the input latch in the dimming switch terminal unit 2a whose dimming-up switch S₅ has been manipulated, and makes the terminal unit 2a remain in its waiting state until the next switch input variation occurs.

Next, judging, based on the recognized input latch data, that the dimming-up switch S₅ has been manipulated, the central control unit 1 accesses the dimming control terminal unit 3a corresponding to the interruption-requesting terminal unit 2a, and sends the transmission signal V_{S} of a status monitor mode to make the terminal unit 3a return the operation status (dimming status) of the light load L₁ as the monitor data. Receiving the status monitor data (on/off status and dimming level status of the light load L₁) from the dimming control terminal unit 3a, the central control unit 1 recognizes the statuses of the dimming control terminal unit 3a. Then, the central control unit 1 sends a dimming-up control signal to the dimming control terminal unit 3a. In response thereto, in the dimming control terminal unit 3a, the dimming control circuit 18 establishes a mode for increasing the dimming level, so that the dimming control terminal unit 3a continues to increase the brightness of the light load L₁ by itself. Since the dimming control circuit 18 performs its control operation so that the dimming control terminal unit 3a itself can change the brightness level (in this case, dimming-up) of the light load L₁, the central control unit 1 can perform its processes on other terminal units while the brightness level is being changed.

If the continued dimming-up operation in the dimming control terminal unit 3a causes a brightness variation larger than a preset value, this fact is transmitted from the dimming control terminal unit 3a to the central control unit 1 by an interruption process, and the central control unit 1 generates data representing a level variation. The central control unit 1 transmits the generated data through the signal line 4 to the dimming switch terminal unit 2a, which then indicates the on/off status and the dimming level status of the light load L₁ by the light-emitting diodes LD. This process is performed on all such occasions.

In the meantime, when depression of the dimming-up switch S₅ is released, the dimming switch terminal unit 2a detects this fact, and sends a stop signal to the central control unit 1 in the same interrupting operation as described above, generating the interruption request signal Vᵢ. The central control unit 1 transmits a stop signal to the dimming control terminal unit 3a. Upon reception of the stop signal, the dimming control terminal unit 3a stops the dimming-up operation by the dimming control circuit 18. Then, the central control unit 1 sends the transmission signal V_{S} of an input latch resetting mode to reset the input latch in the dimming switch terminal unit 2a, and makes the dimming switch terminal unit 2a remain in its waiting state until the next switch input variation occurs. In this manner, the dimming-up operation of the light load L₁ using the interruption technique is completed.

The dimming-down operation can be performed in the same manner as the dimming-up operation described above.

As described above, the remote supervisory and controlling system shown in Fig. 1 has an advantage that the central control unit 1 can perform its operations other than the dimming control operation while the dimming control terminal unit 3a itself dims the associated light load L₁. Further, since the dimming switch terminal unit 2a indicates the dimming level of the corresponding light load L₁, a user, recognizing the indicated dimming level, can release the dimming-up switch S₅ or dimming-down switch S₆ to thereby easily set the dimming level at a desired level.

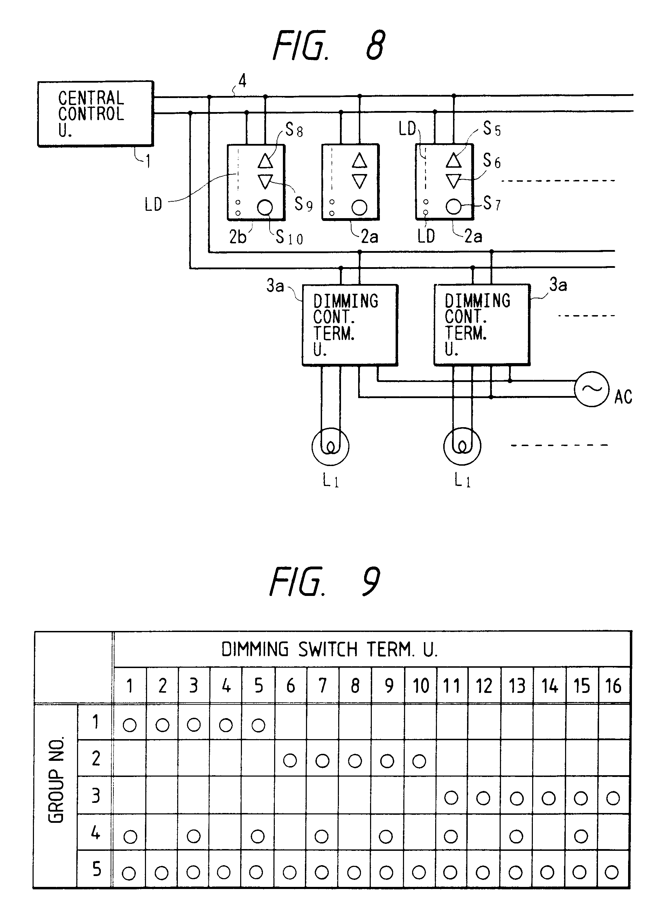

Fig. 8 is a partial diagram showing the construction of a remote supervisory and controlling system according to a second embodiment of the invention. The second embodiment is different from the first embodiment of Fig. 1 in that a group dimming terminal unit 2b is connected to the signal line 4. In the following, group dimming control according to the second embodiment will be described, in which a plurality of light loads L₁ are dimmed up or dimmed down at a time.

The group dimming terminal unit 2b has a construction similar to the dimming switch terminal unit 2a shown in Fig. 4(a). There are provided on the front face a dimming-up switch s₈, a dimming-down switch S₉, a switch S₁₀ for turning on or off the light loads L₁, and an array of light-emitting diodes LD for indicating the on/off status and dimming level status of the light loads L₁.

In the memory section 27 of the central control unit 1, which receives a signal from the group dimming terminal unit 2b, a control area (i.e., light loads L₁ to be controlled) of each group dimming terminal unit 2b is preliminarily stored by group setting, etc. When one of the switches S₈-S₁₀ of one group dimming terminal unit 2b is depressed, the central control unit 1 controls a plurality of grouped switch terminal units 2a of the group so as to perform at once the dimming control or on/off control of the light loads L₁ belonging to the group.

Fig. 9 shows an example of grouping 16 dimming switch terminal units 2a. The dimming switch terminal units 2a marked with ○ are included in the corresponding group.

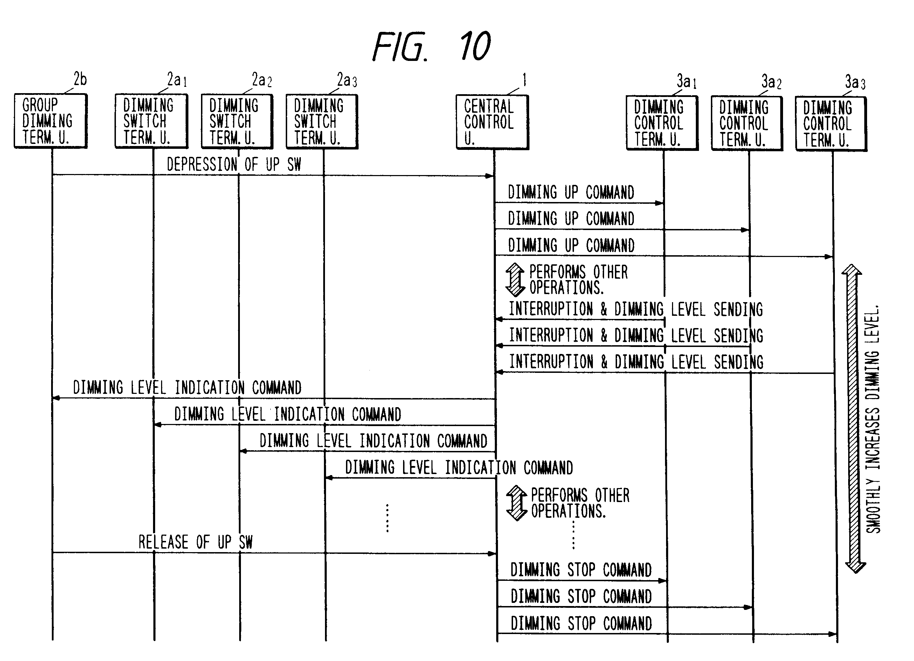

Fig. 10 is a flow chart of an example of the group dimming control, in which three dimming switch terminal units 2a₁-2a₃ are controlled to perform the dimming control by the corresponding dimming control terminal units 3a₁-3a₃. That is, the dimming switch terminal units 2a₁-2a₃ are set and stored as one group in the memory section 27 of the central control unit 1 to perform the grouped dimming control.

First, when the dimming-up switch S₈ of the group dimming terminal unit 2b is depressed, the central control unit 1 sends "dimming-up commands" to the respective dimming control terminal units 3a₁-3a₃ set in the memory section 27. In response thereto, each of the dimming control terminal units 3a₁-3a₃ gradually increases brightness of the associated light load L₁ by itself (with the signal processing section 11 and the dimming control circuit 18). As already described above, the central control unit 1 can perform other processes during this period. After a predetermined brightness increase of the associated light load L₁ by its own control, each of the dimming control terminal units 3a₁-3a₃ generates the interruption request signal Vᵢ to inform the central control unit 1 of the brightness increase, and the central control unit 1 recognizes the brightness at this instant and sends "dimming level indication commands" to the dimming switch terminal unit 2a₁-2a₃. Each of the dimming switch terminal units 2a₁-2a₃ indicates by means of the light-emitting diodes LD the brightness level of the corresponding light load L₁. The central control unit 1 can perform other processes until the release of the dimming-up switch S₈ (described below).

Upon release of the dimming-up switch S₈ of the group dimming terminal unit 2b, the central control unit 1 detects a signal therefrom and sends "dimming stop commands" to the dimming control terminal units 3a₁-3a₃ to stop the brightness increasing operation of the dimming control terminal units 3a₁-3a₃.

The dimming-down control of the light loads L₁ can be performed in the same manner as the dimming-up control described above. Further, the on/off control of the light loads L₁ can be performed at once by the group dimming terminal unit 2b.

As described above, the remote supervisory and controlling system shown in Fig. 8 has advantages that grouped light loads L₁ can be dimmed up or dimmed down simultaneously, and the group setting can easily be altered.

In the following, an embodiment of the dimming switch terminal unit 2a for monitoring the switches S₅-S₇ will be described in detail.

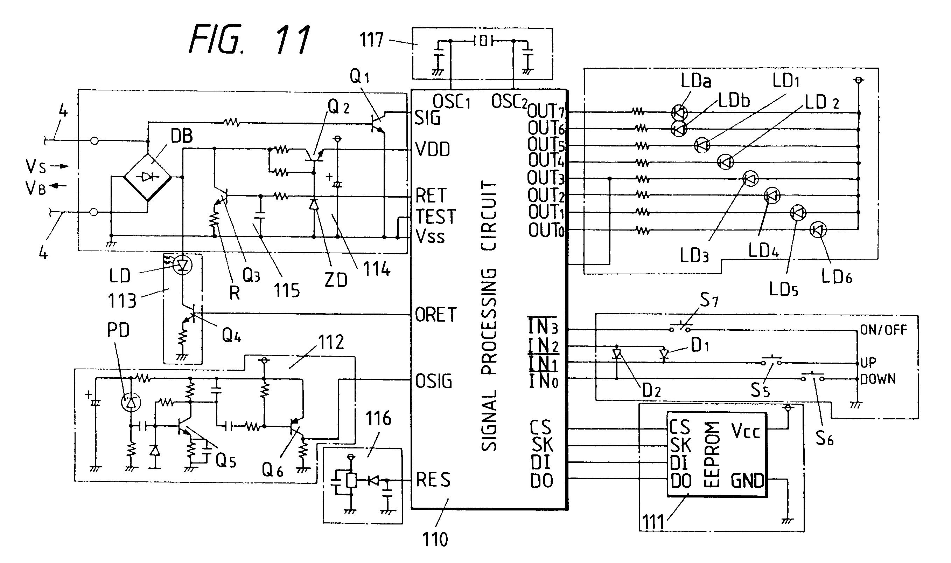

In Fig. 11, the dimming switch terminal unit 2a is made up of a signal processing circuit 110 consisting of a microcomputer, an address setting section 111 consisting of an EEPROM, an optical signal receiver 112 including a photodiode PD and transistors Q₅ and Q₆, an optical signal transmitter 113 including a light-emitting diode LD and a transistor Q₄, a power source circuit 114 including a Zener diode ZD and a transistor Q₂, a returning circuit 115 including a resistor R and a transistor Q₃, a resetting circuit 116, and an oscillator circuit 117. As described above, the switches S₅, and S₆ are switches for dimming-up and dimming-down the brightness of the light load L₁, respectively. The switch S₇ is a switch for turning on or off the light load L₁.

While being rectified by a diode bridge DB, the transmission signal V_{S} received through the signal line 4 is input to a signal input terminal SIG of the signal processing circuit 110. The power source circuit 114 provides an electric power for the signal processing circuit 110 by regulating the rectified voltage of the transmission signal V_{S}. The signal processing circuit 110 judges whether the address data in the received transmission signal V_{S} coincides with the own address set in the address setting section 111. When the address coincidence occurs, the signal processing circuit 110 takes in the control data transmitted from the central control unit 1, and controls light-emitting diodes LDa and LDb for indication of load operation (on: red; off: green). Further, the signal processing circuit 110 checks the status of the switches S₅-S₇ to generate the monitor data, and makes the return circuit 115 send the return signal V_{B} including the monitor data as the current mode signal, which is sent by connecting the two wires of the signal line 4 with a low-impedance resistor R, to the central control unit 1 through the signal line 4.

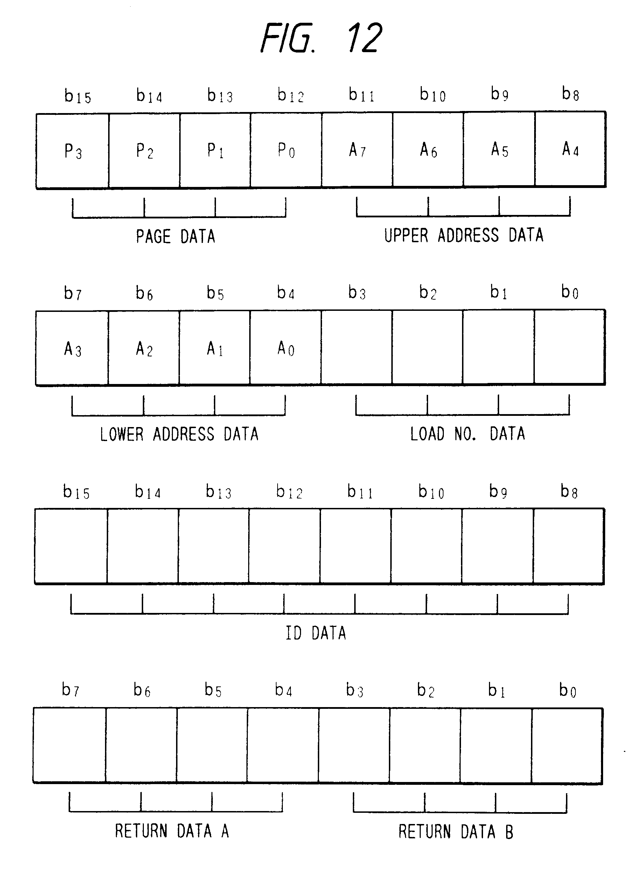

The data writing into the address setting section 111 (EEPROM) is performed by the signal processing circuit 110. That is, the signal processing circuit 111 processes the signal received by the optical signal receiver 112 to produce data to be written into the address setting section 111, which is 32-bit data having the prescribed format as shown in Fig. 12. The signal to be received by the optical signal receiver 112 is an optical wireless signal transmitted from a data setting device (not shown). A response signal such as a reception confirmation signal is transmitted as another optical wireless signal from the optical signal transmitter 113 to ensure the reliable wireless transmission between the dimming switch terminal unit 2a and the data setting device.

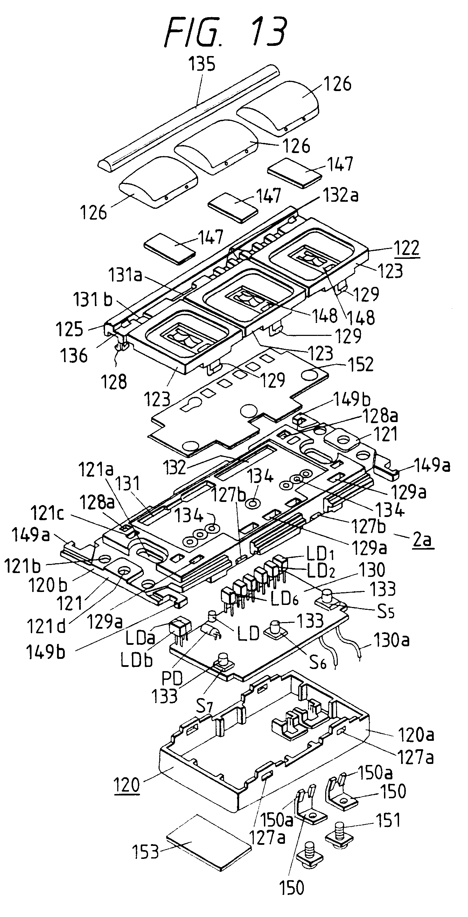

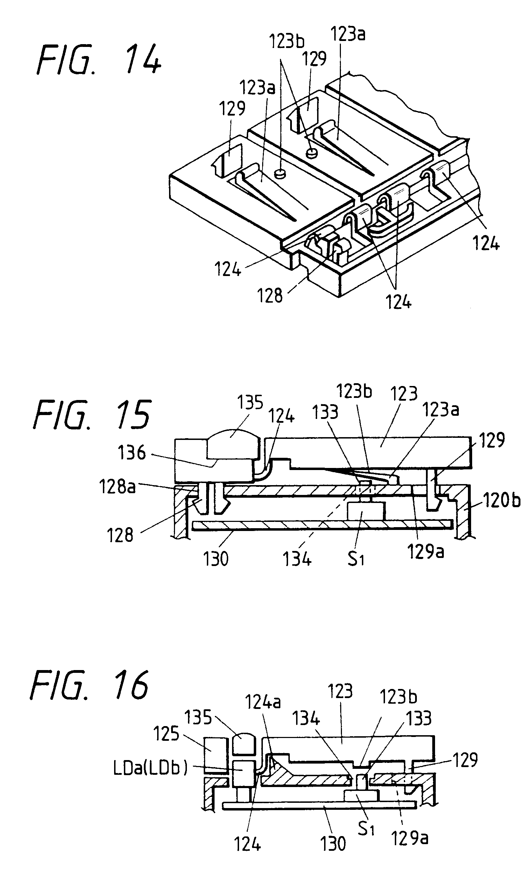

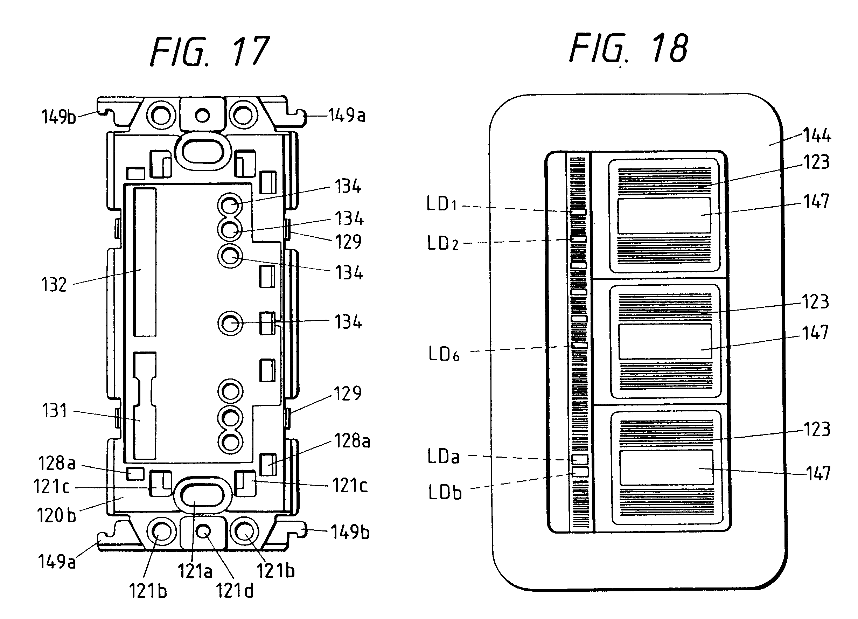

Figs. 13-17 are views showing the specific structure of the dimming switch terminal unit 2a according to the embodiment. More specifically, Fig. 13 is an overall perspective view showing a disassembled state of the dimming terminal unit 2a. Fig. 14 is a perspective rear view of a manipulation block 122. Figs. 15 and 16 are sectional views showing an assembly of a printed circuit board 130, a cover 120b and the manipulation block 120. Fig. 17 is a plan view of the cover 120b.

In these figures, the three switches S₅-S₇ for load control and the corresponding six light-emitting diodes LD₁-LD₆ for dimming level indication and light-emitting diodes LDa and LDb for on/off indication are provided on the front side of the terminal unit case 120 so that the switches and the corresponding diodes are associated with each other. The terminal unit case 120 consists of a case body 120a which is box-like and open to the fore side and the cover 120b having integral fixing pieces 121. The case body 120a and cover 120b are assembled together by fitting side protrusions 127b of the cover 120b into holes 127a of the case body 120a. Each of the fixing pieces 121 has a screw hole 121d for a cosmetic cover and two fixing holes 121b for direct installation to a wall. A fixing portion is formed by the fixing holes 121b, and fixing holes 121a for a wiring box and L-shaped fixing holes 121c for pinching metal fittings both provided in the cover 120b.

The manipulation block 122 to be in contact with the switches S₅-S₇ is provided on the front side of the cover 120b, and assembled with the cover 120b by inserting nails 128 into holes 128b of the cover 120b. Ends of three manipulation handles 123 are connected to a connecting piece 125 through thin elastic pieces 124 to form the integral manipulation block 122. A name cover 126 is fixed into a front dent of each manipulation handle 123 by pressed insertion. A label 147 is fitted into a groove 148 of each manipulation handle 123 so that the name cover 126 is located on the rear side of the name cover 126. On the rear surface of each manipulation handle 123, there are provided a protruded switch-depressing rib 123b and a return spring piece 123a which is integral with and protruded from the manipulation handle 123. An elastic force for returning the manipulation handle 123 is obtained by the elastic contact of the return spring piece 123a to the front surface of the cover 120b. A protrusion 129 is protruded from the other end of each manipulation handle 123, and is engaged with a hole 129a of the cover 120b to prevent the manipulation handle 123 from lifting off. The three manipulation handles 123 are integral parts of the manipulation block 122, as described above, and can be manipulated by a user with a "piano touch."

The light-emitting diodes LDa and LDb for on/off indication, the light-emitting diodes LD₁-LD₆ for dimming level indication, and the photodiode PD and light-emitting diode LD for reception/transmission of an optical wireless signal are mounted, i.e., aligned on the printed circuit board 130 which is housed in the terminal unit case 120. In the cover 120b of the terminal unit case 120, there are formed an opening 131 for protruding therefrom the light-emitting diodes LDa and LDb, photodiode PD and light-emitting diode LD, an opening 132 associated with the light-emitting diodes LD₁-LD₆ for dimming level indication, and holes 134 for protruding therefrom manipulation portions 133 of the switches S₅-S₇. Also the connecting piece 125 of the manipulation block 122 has openings 131a and 131b corresponding to the opening 131, and six openings 32a corresponding to the opening 132. A light guide 135 made of transmissive resin is fixed into a groove 136 of the connecting piece 125 (by a both-sides-adherent tape) to cover the openings 131a, 131b and 132a. In addition, a filter, such as an infrared-light-transmissive filter, for selectively transmitting only the optical wireless signal is fitted into the opening 131a.

The dimming switch terminal unit 2a having the above construction is assembled in the following manner. First, terminal plates 150 are inserted into the case body 120a, ribs 150a are folded, and terminal screws 150a are fixed into the terminal plates 150. Lead wires 130a of the printed circuit board 130 are connected to the terminal plates 150. After a nameplate 152 has been stuck to the cover 120b, the printed circuit board 130 is fitted into the cover 120b and then the cover 120b is fitted to the case body 120a. Next, the light guide 135 is stuck to the groove 136 of the manipulation block 122 by a both-sides-adherent tape. After labels 147 are placed in the grooves 148 of the manipulation handles 123, name covers 126 are fitted into the respective manipulation handles 123. The manipulation block 122 is fitted to the cover 120b by inserting the protrusions 129 and nails 128 of the manipulation block 122 into the holes 129a and 128a of the cover 120b, respectively. Finally, a nameplate 153 is stuck to the case body 120a.

Fig. 18 shows an example of installation of the above dimming switch terminal unit 2a, in which the terminal unit 2a is fixed to a wiring box buried in a wall, etc., more specifically to a cosmetic plate 144 of a usual wiring apparatus.

In the following, the operation of the dimming terminal unit 2a of the embodiment will be described.

The 32-bit data to be written into the address setting section 111, i.e., EEPROM consists of, as shown in Fig. 12, 4-bit page data, 4-bit upper address data, 4-bit lower address data, 4-bit load number data, 8-bit identification data, 4-bit return data A, and 4-bit return data B. Such 32-bit data can freely be written into or read from the address setting section 111 by the signal processing circuit 110 at any time required. That is, when it is required to alter the own address, the kind of terminal unit, the control method or monitor method at the time of system installation or layout modification of loads and switches, necessary data are set by the data setting device and transmitted as an optical wireless signal. The optical wireless signal is received by the optical signal receiver 112, processed by the signal processing circuit 110, and written into the address setting section 111, i.e., EEPROM. Since the EEPROM continues to store data even in the occurrence of an electric power failure, there is no need of incorporating a backup power source. Further, since data can be rewritten electrically, the address alteration can easily be performed.

Next, the on/off control and the dimming control of the light loads L₁ will be described in detail. As shown in Fig. 11, the on/off switch S₇, dimming-up switch S₅ and dimming-down switch S₆ for the light loads L₁ are connected to input terminals I̅N̅₃̅, I̅N̅₁̅ and I̅N̅₀̅, respectively.

### (1) On/off control:

The terminal I̅N̅₃̅ of the signal processing circuit 110 is of active-L type. Therefore, the input signal becomes low every time the switch S₇ is depressed, and the light load L₁ is turned on or off in accordance with depression of the switch S₇. The signal processing circuit 110 only detects the falling edge of the input signal.

### (2) Dimming-up control:

The input terminal I̅N̅₁̅ is of active-L type, and the input terminal IN₂ is of active-H type. Therefore, the input signal to the terminal I̅N̅₁̅ becomes low in response to depression of the switch S₅, and the brightness of the light load L₁ continues to increase while the switch S₅ is depressed. In this case, the low level signal is also input through a diode D₁ to the terminal IN₂. Upon release of the switch S₅, the terminal I̅N̅₁̅ is supplied with a high level signal by means of a pull-up resistance built in the signal processing circuit 110, and the dimming level is kept at a level of the time instant of the switch release.

### (3) Dimming-down control:

The input terminal I̅N̅₀̅ is of active-L type. Therefore, like the case of the dimming-up control, the brightness of the light load L₁ continues to decease while the switch S₆ is depressed. Upon release of the switch S₆, a high level signal is supplied to the terminal I̅N̅₀̅ and the dimming level is kept at a level of the time instant of the switch release.

In response to a turning-on manipulation of the switch S₇, the light-emitting diodes LDa starts emitting red light. In response to a turning-off manipulation of the switch S₇, the light-emitting diode LDb starts emitting green light. In the case of the dimming-up and dimming-down control, the signal processing circuit 110 controls the light-emitting diodes LD₁-LD₆ according to the current dimming level of the light load L₁.

The dimming switch terminal unit 2a of the above embodiment has an advantage that the address data can easily be rewritten by using the optical wireless signal, making it possible to eliminate dipswitches. Further, by virtue of the integrated manipulated block having the three manipulation handles, it is not necessary to separately incorporate three manipulation handles, improving the easiness of manufacture.

In the following, an embodiment of the dimming control terminal unit 3a for dimming the light load L₁ will be described in detail.

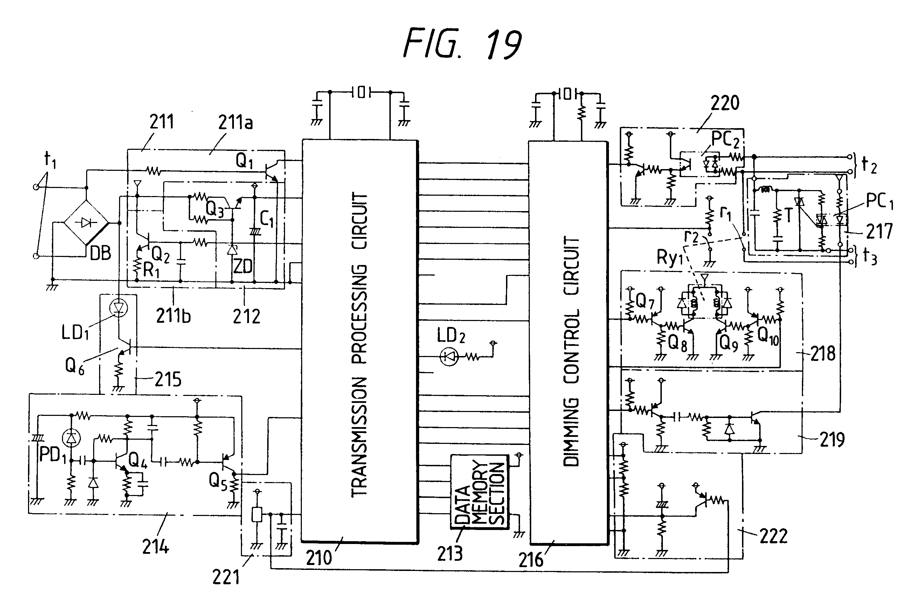

Fig. 19 shows the circuit construction of the embodiment of the dimming control terminal unit 3a. A transmission processing circuit 210 consisting of a microcomputer is connected through a transceiver circuit 211 to the signal line 4 at a terminal t₁. The transceiver circuit 211 consists of a receiver section 211a having a transistor Q₁ and a transmitter section 211b having a transistor Q₂ and a resistor R₁. The transmission signal V_{S} sent from the central control unit 1 through the signal line 4 is provided to the transmission processing circuit 210 through the receiver section 211a. On the other hand, the current mode signal can be returned from the transmission processing circuit 210 to the central control unit 1 by turning on the transistor Q₂ and thereby connecting the two wires of the signal line 4 through the resistor R₁. Power supply to the transmission processing circuit 210 is performed by full-wave rectification of the signal from the signal line 4 by a diode bridge DB and voltage regulation by a power source circuit 212 including a transistor Q₃, a Zener diode ZD and a capacitor C₁. The diode bridge DB also serves as part of the transmitter section 211b. The receiving status of the transmission signal V_{S} is indicated by the flashing of a light-emitting element LD₂ connected to the transmission processing circuit 210.

Address data of the dimming control terminal unit 3a and function data for setting functions of the transmission processing circuit 210 are stored in a data memory section 213 consisting of an EEPROM. Data to be stored in the data memory section 213 is generated in the transmission processing circuit 110 by processing a signal received by an optical signal receiver circuit 214 including a photodetector PD₁ and transistors Q₄ and Q₅. The signal received by the optical signal receiver circuit 214 is a wireless signal, such as an infrared light signal, transmitted from the externally provided data setting device (not shown). When the wireless signal is received, an optical signal transmitter circuit 215 including a light-emitting element LD₁ and a transistor Q₆ returns to the data setting device a wireless response signal which is responsive to the contents of the received wireless signal and confirms the signal reception, setting completion, etc.

The transmission processing circuit 210 is connected to a dimming control circuit 216 consisting of a microcomputer, which phase-controls a power control device T on the basis of data transmitted from the central control unit 1. A commercial power line AC is connected to a terminal t₂, and the light load L₁ is connected to a terminal t₃. Inserted between the terminals t₂ and t₃ are a contact r₁ of a latching relay R_{y1} and a phase control circuit 217 including the power control device T and a photocoupler PC₁. The latching relay R_{y1,} which is controlled by an output of the dimming control circuit 216 through a relay drive circuit 218 including transistors Q₇-Q₁₀, is equipped with two contacts r₁ and r₂. The contact r₂ is adapted to return its on/off status to the dimming control circuit 216. The light-emitting element of the photocoupler PC₁ in the phase control circuit 217 flashes on the basis of an output of the dimming control circuit 216 provided through a drive circuit 219, and the photodetecting element thereof phase-controls the power control device T so that the light load L₁ operates at a dimming level set in the dimming control circuit 216. In the above manner, the dimming control circuit 216 controls the light output of the light load L₁ under the condition that the contact r₁ of the latching relay R_{y1} is closed to actuate the light load L₁. The power-supplying status from the commercial power line AC is input to the dimming control circuit 216 from a power source monitor circuit 220 including a photocoupler PC₂. Resetting circuits 221 and 222 are connected to the transmission processing circuit 210 and dimming control circuit 216, respectively, so that the circuits 210 and 216 are reset when they are connected to the signal line 4 and thereby supplied with power.

With the construction described above, upon reception of the transmission signal V_{S} from the central control unit 1, the dimming control terminal unit 3a compares the address data included in the transmission signal V_{S} with the address data stored in the data memory section 213. If they coincide with each other, the dimming control circuit 216 sets the dimming level on the basis of the control data included in the subsequent transmission signal V_{S} to control the light output of the light load L₁.

An instruction for adjusting the light output of the light load L₁ connected to the dimming control terminal unit 3a is given by the manipulation of the button switches S₅ and S₆ of the corresponding dimming switch terminal unit 2a. Upon reception of the control data generated in response to the depression of the switch S₅, the dimming control terminal unit 3a starts increasing the light output of the associated light load L₁. Then, when the switch S₅ is released (recognizing that the output level has reached an appropriate level), the dimming control terminal unit 3a stops the light output increase of the light load L₁ and thereafter keeps the light output level. On the other hand, upon depression of the switch S₆, the dimming control circuit 3a starts decreasing the light output of the associated light load L₁. Then, when the switch S₆ is released, the dimming control terminal unit 3a stops the light output decrease and thereafter keeps the light output level. Since the dimming level is returned from the dimming control terminal unit 3a to the central control unit 1, when the system is restored from an electric power failure the preceding dimming level can be restored.

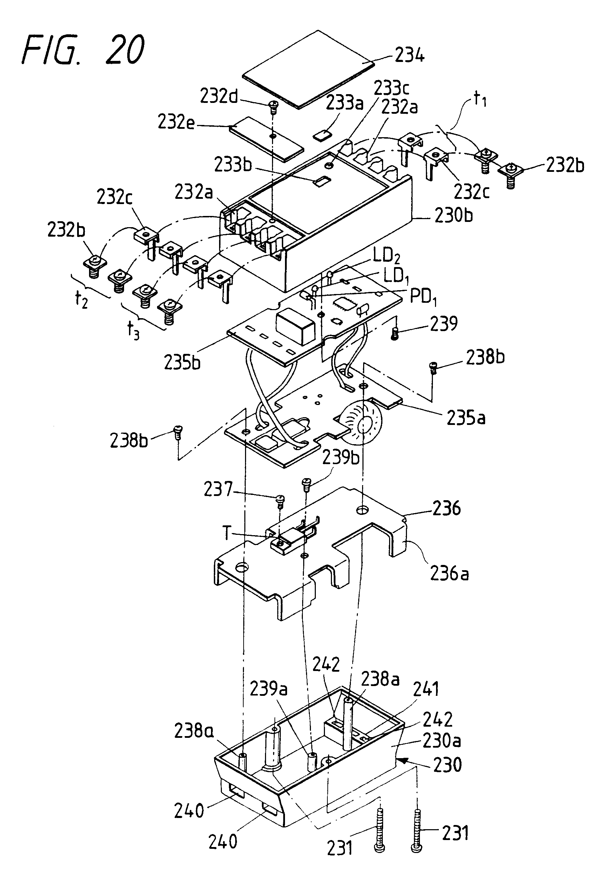

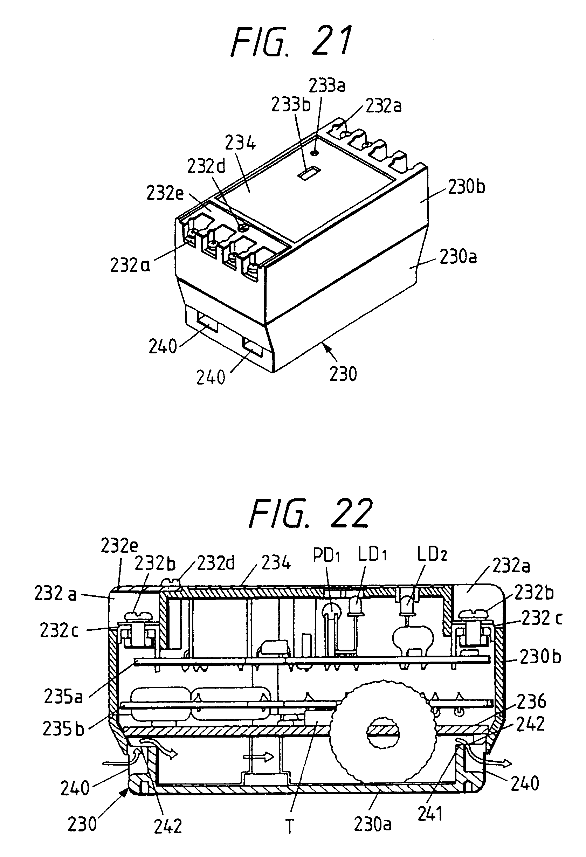

Figs. 20 and 21 show the structure of the dimming control terminal unit 3a. The above-described circuits are housed in a case 230 whose dimensions are normalized according to the Japanese Industrial Standard (C-8370, Supplement 5). The case 230 is formed by fitting a box-like body 30a open to the upper side in Fig. 20 to a cover 230b using screws 31. Terminal dents 232a for receiving the terminals t₁-t₃ are formed on the both sides of the cover 232a. Within each of the dents 232a, a terminal plate 232c is arranged, with which a terminal screw 232b is engaged. Part of the terminal dents 232a corresponding to the terminals t₂ and t₃, which are to be connected to the commercial power line AC and the light load L₁, respectively, are covered with a terminal cover 232e which is fixed to the top surface of the cover 230b by a fixing screw 232d. Formed in the top surface of the cover 230b are a transmissive window 233b provided with a filter 233a for transmitting light emitted from the light-emitting element LD₁ and light to be received by the photodetector PD₁, and another transmissive window 233c for transmitting light emitted from the light-emitting element LD₂. A transparent nameplate 34 is also fitted to the top surface of the cover 230. A first printed circuit board 235a on which the phase control circuit 217 is mounted, and a second printed circuit board 235b on which other circuit components are mounted are housed in the case 230 such that the two boards 235a and 235b are apart from each other in the vertical direction. The power control device T is fixed by a screw 237 on a metal radiator plate 236 provided under the first printed circuit board 235a. The first printed circuit board 235a is fixed to bosses 238a provided at the internal periphery of the body 230a by screws 238b, and the radiator plate 236 is fixed to a boss 239a provided at the center of the body 230a by a screw 239b. The second printed circuit board 235b is fixed to the bottom side of the cover 230b by a screw 239.

Connecting holes 240 for a fixing member which is used for fixing the case 230 to a distribution switchboard are formed at the bottom portions of the both side faces of the body 230a. As shown in Fig. 22, the connecting holes 240 communicate with ventilation openings 242 provided over steps 241 provided inside the body 230a. Legs 236a are protruded from the periphery of the radiator plate 236 so that the main part of the radiator plate 236 is apart from the bottom face of the body 230a and forms the ventilation openings 242. Further, the radiator plate 236 is designed such that almost all the circumference thereof can be in contact with the inside surface of the body 230a. Therefore, on the lower side of the radiator plate 236, external air can be introduced into the body 230a through the connecting holes 240 and the ventilation openings 242, and heat can efficiently be radiated from the radiator plate 236 to the outside of the case 230 by contacting the air flow (shown by arrows in Fig. 22) to the radiator plate 236. With the above structure, the radiator plate 236 is not exposed from the case 230 and hence a good appearance is obtained while keeping efficient dissipation of heat from the power control device T.

In the dimming control terminal unit 3a of the above embodiment, the case 230 has normalized dimensions according to the distribution switchboard standard, and the radiator plate 236 thermally connected to the power control device T is arranged within the case 230 and the connection holes 240 are formed in the side faces of the case 240 to introduce external air into the case 240 and to make it contact with the radiator plate 236. Therefore, the case 230 can be installed in a distribution switchboard, and the heat generated by the power control device T can effectively be radiated without exposing a radiator plate from the case 230. Since the connecting holes 240 are also used to fix the case 230 to a switchboard, the connecting holes 240 are hardly seen from the outside, providing a good appearance of a switchboard assembly. Further, since the address setting section is arranged on the front face of the case 230, the address data can be set while the case 230 is kept installed in the switchboard, providing easiness in the address setting or alteration.

## Claims

1. A remote supervisory and controlling system in which a plurality of terminal units (2, 3, 7, 8, 9) are connected to a central control unit (1) through a two-wire signal line (4), and the central control unit (1) accesses each of the terminal units to perform time-divisional multiplex transmission of monitor data and control data between the central control unit (1) and each of the terminal units, characterized by comprising:
a dimming switch terminal least unit (2a), connected to the signal line, for monitoring at least a dimming-up switch (S₅) and a dimming-down switch (S₆);
a dimming control terminal unit (3a), connected to the signal line, for performing dimming-up and dimming-down control of an associated light load; and
the central control unit (1), for, upon depression of the dimming-up switch or dimming-down switch, detecting dimming monitor data sent from the dimming switch terminal unit (2a) which indicates depression of the dimming-up switch (S₅) or dimming down switch (S₆) and sending to the dimming control terminal unit (3a) first control data which instructs it to start the dimming-up or dimming down control, and for, upon release of the dimming-up switch or dimming-down switch, sending to the dimming control terminal unit (3a) second control data which instructs it to stop the dimming-up or dimming-down control;
wherein the dimming control terminal unit (3a) continues by itself the dimming-up or dimming-down control during a period from reception of the first control signal to reception of the second control signal.

2. The system according to claim 1, wherein each time a predetermined variation has occurred in a dimming level of the light load (L₁), the dimming control terminal unit (3a) sends to the central control unit (1) level monitor data indicating the dimming level of the associated light load, the central control unit (1) sends third control data indicating the dimming level to the dimming switch terminal unit (2a), and the dimming switch terminal unit indicates the dimming level on the basis of the third control data.

3. The system according to claim 1, further comprising:
a group dimming terminal unit (2b), connected to the signal line, for monitoring at least a group dimming-up switch (S₈) and a group dimming-down switch (S₉); and
memory means (27), provided in the central control unit (1), for storing addresses of selected ones of the dimming control terminal units (3a₁-3a₃);
wherein when the group dimming-up switch (S₈) or group dimming-down switch (S₉) of the group dimming terminal unit (2b) is manipulated, the central control unit (1) controls the selected ones of the dimming control terminal units (3a) on the basis of the addresses stored in the memory means (27) and group monitor data sent from the group dimming terminal unit (2b) which indicates manipulation of the group dimming-up switch (S₈) or group dimming-down switch (S₉) so that a plurality of the light loads (L₁, L₂) connected to the respective selected ones of the dimming control terminal units are subjected to dimming control at once.

4. The system according to claim 3, wherein the memory means (27) comprises an electrically erasable programmable ROM.

5. The system according to claim 1, wherein the dimming switch terminal unit (2a) further monitors an on/off switch (S₁-S₄), the dimming control terminal unit (3a) further performs on/off control of the associated light load (L₁, L₂); and the central control unit (1) detects on/off monitor data sent from the dimming switch terminal unit (2a) which indicates manipulation of the on/off switch (S₁₀), and sends to the dimming control terminal unit (3a) on/off control data which instructs it to turn on or turn off the associated light load (L₁, L₂).

6. The system according to claim 5, wherein the dimming switch terminal unit (2a) comprises:
a terminal unit case (120);
the dimming-up switch (S₅), the dimming-down switch (S₆) and the on/off switch (S₇), all of which are arranged on a front face of the terminal unit case;
a signal processing circuit (21) for generating the dimming monitor data and the on/off monitor data;
an address setting section (12) including an electrically erasable programmable ROM (26) for setting an own address of the dimming switch terminal unit (2a);
an optical signal receiver section for receiving an optical signal representing the own address to be set in the address setting section (12); and
a manipulation block comprising, as integral parts, three manipulation handles (123) to be depressed to actuate the dimming-up, dimming-down and on/off switches (S₅-S₇), respectively.

7. The system according to claim 1, wherein the dimming control terminal unit (3a) comprises:
a terminal unit case (230) having normalized dimensions;
a transmission processing circuit (210) for recognizing the first and second control data sent from the central control unit (1);
an address memory section (213) for storing an own address of the dimming control terminal unit (3a);
a dimming circuit including a power control device (T) for dimming the associated light load (L₁);
a dimming control circuit (216) for phase-controlling the dimming circuit;
an address setting section, arranged on a front face of the terminal unit case (230), for setting the own address;
a radiator plate (236) arranged within the terminal unit case (230) and thermally coupled with the power control device (T); and
connecting holes (240), formed in side faces of the terminal unit case (230) and capable of being connected to fixing metal fittings for fixing the terminal unit case to a distribution switchboard, for introducing external air to be in contact with the radiator plate (236).

8. The system according to claim 7, wherein the address setting section comprises a photodetector (PD1) for detecting a first optical signal carrying address data, and a light-emitting element (LD2) for emitting a second optical signal carrying confirmation data, and wherein the dimming control terminal unit (3a) further comprises a transmissive window (233c) capable of transmitting the first and second optical signal.

## Patentansprüche

1. Fernüberachungs- und Steuersystem, in dem eine Vielzahl von Endeinheiten (2, 3, 7, 8, 9) mit einer Zentralsteuereinheit (1) über eine zweidrahtige Signalleitung (4) verbunden sind und die zentrale Steuereinheit (1) jede der Endeinheiten ansteuert, um eine Zeitmultiplexübertragung von Überwachungsdaten und Steuerdaten zwischen der zentralen Steuereinheit (1) und jeder der Endeinheiten durchzuführen, **dadurch gekennzeichnet**, daß das System umfaßt:
eine Helligkeitsschaltendeinheit, die mit der Signalleitung verbunden ist zum Überwachen wenigstens eines Hochdimmschalters und eines Herunterdimmschalters (S₆);
eine Helligkeitssteuerendeinheit (2a), die mit der Signalleitung verbunden ist zum Ausführen einer Hochdimm- und Herunterdimmsteuerung einer zugehörigen Lichtlast;
worin die zentrale Steuereinheit (1), nach dem Betätigen des Hochdimmschalters oder Herunterdimmschalters die Helligkeitsüberwachungsdaten erkennt, welche von der Helligkeitsschaltendeinheit (2a) ausgesandt werden, die Anzeigen, daß der Hochdimmschalter (S₅) oder der Herunterdimmschalter (S₆) betätigt worden ist und die zentrale Steuereinheit erste Steuerdaten an die Helligkeitssteuerendeinheit (3a) aussendet, um diese zu veranlassen, die Hochdimm- oder Herunterdimmsteuerung zu beginnen und nach dem Loslassen des Hochdimm- oder Herunterdimmschalters zweite Steuerdaten an die Helligkeitssteuerendeinheit (3a) aussendet, welche die Endeinheit veranlassen, die Hochdimm- oder Herunterdimmsteuerung anzuhalten;
wobei die Helligkeitssteuerendeinheit (3a) von selbst mit der Hochdimm- oder Herunterdimmsteuerung während einer Zeitdauer von dem Empfang des ersten Steuersignals zum Empfang des zweiten Steuersignals fortfährt.

2. System nach Anspruch 1, worin immer dann, wenn eine vorbestimmte Veränderung bezüglich des Helligkeitspegels der Lichtlast (L₁) aufgetreten ist, die Helligkeitssteuerendeinheit (3a) Pegelüberwachungsdaten an die zentrale Steuereinheit (1) aussendet, welche den Helligkeitspegel der zugehörigen Lichtlast anzeigen, die zentrale Steuereinheit (1) dritte Steuerdaten, welche den Helligkeitspegel kennzeichnen an die Helligkeitsschaltendeinheit (2a) aussendet und die Helligkeitsschaltendeinheit den Helligkeitspegel auf der Basis der dritten Steuerdaten anzeigt.

3. System nach Anspruch 1, welches weiter umfaßt:
eine Gruppendimmendeinheit (2b), die mit der Signalleitung verbunden ist zum Überwachen wenigstens eines Gruppenhochdimmschalters (S₈) und eines Gruppenherunterdimmschalters (S₉); und
eine Speichereinrichtung (27), die in der zentralen Steuereinheit (1) bereitgestellt wird zum Speichern von Adressen einzelner ausgewählter Helligkeitssteuerendeinheiten (3a₁-3a₃);
wobei dann, wenn der Gruppenhochdimmschalter (S₈) oder der Gruppenherunterdimmschalter (S₉) der Gruppendimmendeinheit (2b) betätigt wird, die zentrale Steuereinheit (1) die einzelnen ausgewählten Helligkeitssteuerendeinheiten (3a) auf der Basis der in der Speichereinrichtung (27) gespeicherten Adressen und der Gruppenüberwachungsdaten steuert, welche von der Gruppendimmendeinheit (2b) ausgesandt wurden, welche die Betätigung des Gruppenhochdimmschalters (S₈) oder des Gruppenherunterdimmschalters (S₉) anzeigen, so daß eine Vielzahl von Lichtlasten (L₁, L₂), welche mit den entsprechenden ausgewählten Helligkeitssteuerendeinheiten verbunden sind, sofort bezüglich ihrer Helligkeit gesteuert werden.

4. System nach Anspruch 3, worin die Speichereinrichtung (27) einen elektrisch löschbaren programmierbaren ROM umfaßt.

5. System nach Anspruch 1, worin die Helligkeitsschaltendeinheit (2a) darüber hinaus einen Ein/Ausschalter (S₁-S₄) überwacht, und die Helligkeitssteuerendeinheit (3a) darüber hinaus eine Ein/Aus-Steuerung der zugehörigen Lichtlast (L₁, L₂) durchführt; und die zentrale Steuereinheit (1) Ein/Aus-Überwachungsdaten erfaßt, welche von der Helligkeitsschaltendeinheit (2a) ausgesandt werden, welche die Betätigung des Ein/Ausschalters (S₁₀) anzeigen und Ein/Aus-Steuerdaten an die Helligkeitssteuerendeinheit (3a) sendet, um diese zu veranlassen, die zugehörige Lichtlast (L₁, L₂) ein- oder auszuschalten.

6. System nach Anspruch 5, worin die Helligkeitsschaltendeinheit (2a) umfaßt:
ein Gehäuse (120);
den Hochdimmschalter (S₅), den Herunterdimmschalter (S₆) und den Ein/Ausschalter (S₇), die alle an der Vorderseite des Gehäuses angeordnet sind;
eine Signalverarbeitungsschaltung (21) zum Erzeugen der Helligkeitsüberwachungsdaten und der Ein/Aus-Überwachungsdaten;
ein Adresseinstellteil (12) einschließlich einen elektrisch löschbaren programmierbaren ROM (26) zum Einstellen einer eigenen Adresse für die Helligkeitsschaltendeinheit (2a);
ein optisches Signalempfangsteil zum Empfangen eines optischen Signals, welches die eigene Adresse repräsentiert die in dem Adresseinstellteil (12) eingestellt wird; und
ein Betätigungsteil, welches drei einstückige Betätigungsgriffe (123) umfaßt, welche gedrückt werden, um die Hoch/Herunterdimm- oder Ein/Ausschalter (S₅-S₇) zu betätigen.

7. System nach Anspruch 1, worin die Helligkeitssteuerendeinheit (3a) umfaßt:
ein Gehäuse (230) mit normierten Abmessungen;
eine Übertragungsverarbeitungsschaltung (210) zum Erkennen der ersten und zweiten Steuerdaten, welche von der zentralen Steuereinheit (1) ausgesandt werden;
ein Adresspeicherteil (213) zum Speichern einer eigenen Adresse der Helligkeitssteuerendeinheit (3a);
eine Helligkeitsschaltung einschließlich einer Leistungssteuereinrichtung (T) zum Dimmen der zugehörigen Lichtlast (L₁);
eine Helligkeitssteuerschaltung (216) zum Steuern der Phase der Dimmschaltung;
ein Adresseinstellteil, welches an der Vorderseite des Gehäuses (230) angeordnet ist zum Einstellen der eigenen Adresse;
eine Abstrahlplatte (236), die in dem Gehäuse (230) angeordnet ist und thermisch mit der Leistungssteuereinrichtung (T) gekoppelt ist; und
Verbindungslöcher (240), die auf den Seitenflächen des Gehäuses (230) angeordnet sind und mit Befestigungsmetallbeschlägen verbunden werden können zum Befestigen des Gehäuses mit einer Verteilungsschalttafel und zum Einführen von Luft von außen, die in Kontakt mit der Abstrahlplatte (236) gebracht wird.

8. System nach Anspruch 7, worin das Adresseinstellteil einen Fotodetektor (PD1) umfaßt zum Erkennen eines ersten optischen Signals, welches Adressdaten enthält und weiterhin ein lichtemittierendes Element (LD₂) umfaßt zum Aussenden eines zweiten optischen Signals, welches die Bestätigungsdaten enthält und worin die Helligkeitssteuerendeinheit (3a) darüber hinaus ein durchsichtiges Fenster (233c) umfaßt, welches in der Lage ist, das erste und zweite optische Signal zu übertragen.

## Revendications

1. Système de surveillance et de commande à distance dans lequel une pluralité de terminaux (2, 3, 7, 8, 9) sont connectés à une unité centrale de commande (1) par une ligne de signaux à deux fils (4), et l'unité centrale de commande (1) a accès à chacun des terminaux pour exécuter une transmission multiplex à répartition dans le temps de données de contrôle et de données de commande entre l'unité centrale de commande (1) et chacun des terminaux, caractérisé en ce qu'il comprend :
un terminal d'interrupteurs de réduction (2a), connecté à la ligne de signaux, pour contrôler au moins un interrupteur de réduction (S₅) et un interrupteur d'arrêt de réduction (S₆) ;
un terminal de commande de réduction (3a), connecté à la ligne de signaux, pour exécuter une commande de réduction et d'arrêt de réduction d'une charge de lampe associée ; et,
l'unité centrale de commande (1) pour détecter, pendant l'état enfoncé de l'interrupteur de réduction ou de l'interrupteur d'arrêt de réduction, des données de contrôle de réduction envoyée par le terminal d'interrupteurs de réduction (2a) qui indiquent l'état enfoncé de l'interrupteur de réduction (S₅) ou de l'interrupteur d'arrêt de réduction (S₆) et envoyer au terminal de commande de réduction (3a) des premières données de commande lui donnant l'ordre de déclencher la commande de réduction ou d'arrêt de réduction, et pour envoyer, pendant l'état relâché de l'interrupteur de réduction ou de l'interrupteur d'arrêt de réduction, des deuxièmes données de commande au terminal de commande de réduction (3a) qui lui donnent l'ordre d'arrêter la commande de réduction ou d'arrêt de réduction ;
dans lequel le terminal de commande de réduction (3a) maintient de lui-même la commande de réduction ou d'arrêt de réduction pendant une période comprise entre la réception du premier signal de commande et la réception du deuxième signal de commande.

2. Système selon la revendication 1, dans lequel chaque fois qu'une variation prédéterminée a eu lieu dans le niveau de réduction de la charge de lampe (L₁), le terminal de commande de réduction (3a) envoie des données de contrôle de niveau à l'unité centrale de commande (1) qui indiquent le niveau de réduction de la charge de lampe associée, l'unité centrale de commande (1) envoie des troisièmes données de commande qui indiquent le niveau de réduction au terminal d'interrupteurs de réduction (2a), et le terminal d'interrupteurs de réduction indique le niveau de réduction selon les troisièmes données de commande.

3. Système selon la revendication 1, comprenant en outre :
un terminal de réduction de groupe (2b), connecté à la ligne de signaux, pour contrôler au moins un interrupteur de réduction de groupe (S₈) et un interrupteur d'arrêt de réduction de groupe (S₉) ; et,
un moyen à mémoire (27) prévu dans l'unité centrale de commande (1), pour mémoriser les adresses de terminaux sélectionnés parmi les terminaux de commande de réduction (3a₁-3a₃) ;
dans lequel, quand l'interrupteur de réduction de groupe (S₈) ou l'interrupteur d'arrêt de réduction de groupe (S₉) du terminal de réduction de groupe (2b) est manipulé, l'unité centrale de commande (1) commande les terminaux sélectionnés parmi les terminaux de commande de réduction (3a) selon les adresses mémorisées dans le moyen à mémoire (27) et des données de contrôle de groupe envoyées par le terminal de réduction de groupe (2b) qui indiquent la manipulation de l'interrupteur de réduction de groupe (S₈) ou de l'interrupteur d'arrêt de réduction de groupe (S₉), de telle sorte qu'une pluralité de charges de lampes (L₁, L₂) connectées aux terminaux respectifs sélectionnés parmi les terminaux de commande de réduction sont soumises en même temps à une commande de réduction.

4. Système selon la revendication 3, dans lequel le moyen à mémoire (27) comprend une mémoire morte ROM programmable effaçable électriquement.

5. Système selon la revendication 1, dans lequel le terminal d'interrupteurs de réduction (2a) contrôle en outre un interrupteur de marche/arrêt (S₁-S₄), le terminal de commande de réduction (3a) exécute en outre une commande de marche/arrêt de la charge de lampe associée (L₁, L₂), et l'unité centrale de commande (1) détecte des données de contrôle de marche/arrêt envoyées par le terminal d'interrupteurs de réduction (2a) qui indiquent la manipulation de l'interrupteur de marche/arrêt (S₁₀), et envoie au terminal de commande de réduction (3a) des données de commande de marche/arrêt qui lui donnent l'ordre de brancher ou de débrancher la charge de lampe associée (L₁, L₂).

6. Système selon la revendication 5, dans lequel le terminal d'interrupteurs de réduction (2a) comprend :
un boîtier de terminal (120) ;
l'interrupteur de réduction (S₅), l'interrupteur d'arrêt de réduction (S₆) et l'interrupteur de marche/arrêt (S₇), qui sont tous disposés sur la face avant du boîtier de terminal ;
un circuit de traitement de signaux (21) pour engendrer les données de contrôle de réduction et les données de contrôle de marche/arrêt ;
une unité d'établissement d'adresses (12) incluant une mémoire ROM programmable effaçable électriquement (26) pour établir une adresse propre au terminal d'interrupteurs de réduction (2a) ;
une unité réceptrice de signaux optiques pour recevoir un signal optique représentant l'adresse propre à établir dans l'unité d'établissement d'adresse (12) ; et,
un bloc de manipulation comprenant, comme parties intégrantes, trois manettes de manipulation (123) à enfoncer pour actionner respectivement les interrupteurs de réduction, d'arrêt de réduction et de marche/arrêt (S₅-S₇).

7. Système selon la revendication 1, dans lequel le terminal de commande de réduction (3a) comprend :
un boîtier de terminal (230) ayant des dimensions normalisées ;
un circuit de traitement de transmission (210) pour identifier les premières et deuxièmes données de commande envoyées par l'unité centrale de commande (1) ;
une unité de mémoire d'adresses (213) pour mémoriser une adresse propre au terminal de commande de réduction (3a) ;
un circuit de réduction incluant un dispositif de commande d'alimentation (T) pour réduire la charge de lampe associée (L₁) ;
un circuit de commande de réduction (216) pour commander en phase le circuit de réduction ;
une unité d'établissement d'adresses, disposée sur la face avant du boîtier de terminal (230), pour établir l'adresse propre ;
une plaque rayonnante (236) disposée à l'intérieur du boîtier de terminal (230) et couplée thermiquement au dispositif de commande d'alimentation (T) ; et,
des trous de connexion (240), formés dans les faces latérales du boîtier de terminal (230) et pouvant être connectés à des attaches métalliques de fixation pour fixer le boîtier de terminal à un panneau de distribution, afin d'introduire de l'air de l'extérieur pour le mettre en contact avec la plaque rayonnante (236).

8. Système selon la revendication 7, dans lequel l'unité d'établissement d'adresses comprend un photodétecteur (PD1) pour détecter un premier signal optique portant des données d'adresse, et un élément émetteur de lumière (LD2) pour émettre un second signal optique portant des données de confirmation, et dans lequel le terminal de commande de réduction (3a) comprend en outre une fenêtre de transmission (233c) pouvant transmettre les premier et second signaux optiques.
